# EUROPÄISCHE PATENTSCHRIFT

(11) **EP 3 701 230 B1**
(45) Veröffentlichungstag und Bekanntmachung des Hinweises auf die Patenterteilung: **26.04.2023**
(21) Anmeldenummer: 18796843.3
(22) Anmeldetag: 23.10.2018
(51) Int. Cl.: G01F 15/14, G01F 15/06, G01D 4/02, G01D 11/24, G01D 11/26

(54) **ZÄHLEREINRICHTUNG**
COUNTING DEVICE
DISPOSITIF COMPTEUR

(30) Priorität: 25.10.2017 DE 102017009931
(43) Veröffentlichungstag der Anmeldung: 02.09.2020
(73) Patentinhaber: Diehl Metering GmbH, 91522 Ansbach (DE)
(72) Erfinder: GRONAUER, Christoph, 90602 Pyrbaum (DE)
(74) Vertreter: Diehl Patentabteilung
(86) Internationale Anmeldenummer: PCT/EP2018/000483
(87) Internationale Veröffentlichungsnummer: WO 2019/081058

(56) Entgegenhaltungen:
- EP-A1- 2 336 732
- AT-B- 177 563
- US-A- 3 308 664
- US-A- 5 734 103

## Beschreibung

Die Erfindung betrifft eine Zählereinrichtung, umfassend ein Zählergehäuse mit einer von einem zu vermessenden Fluid durchströmbaren Messstrecke sowie eine außerhalb am Zählergehäuse angeordnete Auswerte- und Anzeigeeinrichtung zum Ermitteln wenigstens eines fluidbezogenen Messwerts sowie eine am Zählergehäuse befestigte, die Auswerte- und Anzeigeeinrichtung übergreifende Abdeckung.

Derartige Zählereinrichtungen sind beispielsweise in Form von Wasserzählern oder Ähnlichem bekannt. Sie umfassen ein Zählergehäuse mit einer Messstrecke, durch die das zu vermessende Fluid, also beispielsweise Wasser, strömt. Mittels einer Auswerteeinrichtung, also einer Recheneinrichtung respektive einer Auswerteelektronik, wird unter Verwendung eines oder mehrerer geeigneter Sensoren oder dergleichen ein oder werden mehrere fluidbezogene Messwerte zu dem die Messstrecke durchströmenden Fluid ermittelt. Diese werden an einer Anzeigeeinrichtung angezeigt.

Um die Auswerte- und Anzeigeeinrichtung zu schützen, ist beispielsweise am Zählergehäuse ein topfartiger Abschnitt vorgesehen, in dem die Auswert- und Anzeigeeinrichtung eingesetzt wird, und an dem sodann eine Abdeckung, üblicherweise transparent, befestigt wird, die die Auswerte- und Anzeigeeinrichtung abdeckt. Um ein Eindringen von Feuchtigkeit zu vermeiden, wird ein Dichtmittel verwendet. Über dieses wird die plane Abdeckung, üblicherweise eine Glasscheibe, zum Zählergehäuse respektive dem topfartigen Abschnitt abgedichtet. Nachteilig hierbei ist die aufwendige Ausgestaltung des Gehäuses mit dem topfseitigen Abschnitt, in den die Auswerte- und Anzeigeeinrichtung eingesetzt wird. Auch das Einsetzen derselben ist, da sie am Boden des topfartigen Abschnitts zu befestigen ist, aufwendig, da es einer exakten Positionierung der Auswerte- und Anzeigeeinrichtung bedarf, um sie an den entsprechenden Befestigungspunkten gehäuseseitig fixieren zu können. Auch ist trotz Abdichtungen nicht immer sichergestellt, dass die scheibenförmige Abdeckung auch tatsächlich dicht ist, was dann der Fall sein kann, wenn beispielsweise das Dichtelement in Form eines O-Rings nicht korrekt positioniert ist oder Ähnliches. Dies ist insbesondere nachteilig, wenn die Zählereinrichtung in dauerhaft feuchter Umgebung montiert wird oder dauerhaft unter Wasser angeordnet ist.

Für eine in solchen Einsatz in dauerfeuchter Umgebung oder unter Wasser ist es bekannt, die Auswerte- und Anzeigeeinrichtung in einer Vergussmasse einzugießen, wobei die Anzeigeeinrichtung natürlich so eingegossen wird, dass sie noch sichtbar ist, das heißt, dass das Display noch ablesbar ist. Das Vergießen ist einerseits sehr aufwendig. Zum anderen ist die Auswerte- und Anzeigeeinrichtung im Wartungs- und Schadensfall nicht zugänglich, muss also im Bedarfsfall komplett ausgetauscht werden.

Die US 3 308 664 A offenbart einen Fluidzähler mit einer Glashaube, innerhalb der ein Zählwerk angeordnet ist und die über eine Dichtung auf einem Trägerteil aufsitzt. Der Fluidzähler ist in einem topfförmigen Aufnahmeabschnitt eines Zählergehäuses angeordnet.

Die US 5 734 103 A betrifft eine Zählereinrichtung mit einer Glashaube, die mittels eines Dichtmaterials auf einem Basisteil aufsitzt und innerhalb der eine Zählereinrichtung angeordnet ist.

Die AT 177 563 B offenbart einen Wasserzähler mit einem eine Messkammer bildenden Gehäuse, wobei die Messkammer nach außen hin über eine plattenartige Zwischenwand abgeschlossen ist. Zum Festziehen und Abdichten der Zwischenwand ist ein Haltering vorgesehen, an dem eine Kappe befestigt ist. Unterhalb der Kappe ist ein Räderwerk mit einem Zifferblatt und einem Zeiger angeordnet.

Der Erfindung liegt das Problem zugrunde, eine Zählereinrichtung anzugeben, die in einfacherer Weise aufgebaut ist und für einen Einsatz in dauerfeuchter Umgebung oder unter Wasser tauglich ist.

Zur Lösung dieses Problems ist bei einer Zählereinrichtung der eingangs genannten Art erfindungsgemäß vorgesehen, dass die Abdeckung eine die Auswerte- und Anzeigeeinrichtung übergreifende Haube aus Glas ist, die über ein für Wassermoleküle eine Diffusionsdichtheit bewirkendes Dichtmittel abgedichtet auf dem Zählergehäuse aufsitzt, wobei das Zählergehäuse einen plattenförmigen Aufnahmeabschnitt aufweist, an dem die Auswerte- und Anzeigeeinrichtung angeordnet ist und an dem die Haube, über das Dichtmittel abgedichtet, aufsitzt.

Bei der erfindungsgemäßen Zählereinrichtung ist, anders als im Stand der Technik, kein topfförmiger Aufnahmebereich vorgesehen, in den die Auswerte- und Anzeigeeinrichtung einzusetzen ist. Vielmehr wird die Auswerte- und Anzeigeeinrichtung von einer Haube aus Glas übergriffen, die über ein Dichtmittel abgedichtet auf dem Zählergehäuse aufsitzt. Die Haube ist, da aus Glas, aus einem für Wassermoleküle diffusionsdichten Material. Ebenso ist das Zählergehäuse, das üblicherweise aus Metall, vorzugsweise Messing, besteht, diffusionsdicht. Es ist folglich lediglich noch seitens des Dichtmittels eine entsprechende Wahl zu treffen, dass auch hier eine Diffusionsdichtheit gegeben ist.

Damit lässt sich zum einen die Auswerte- und Anzeigeeinrichtung vollständig feuchtigkeitsgeschützt montieren, so dass die Zählereinrichtung ohne der Gefahr des Eindringens von Feuchtigkeit in den Bereich der Auswerte- und Anzeigeeinrichtung auch in dauerhaft feuchter Umgebung oder auch unter Wasser verbauen lässt. Darüber hinaus ist natürlich auch die Ausführung des Zählergehäuses deutlich einfacher, als auf einen topfförmigen Aufnahmebereich verzichtet werden kann, da die Glashaube wie beschrieben die Auswerte- und Anzeigeeinrichtung vollständig übergreift. Natürlich ist auch die Montage gegenüber bisher bekannten Zählereinrichtungen wesentlich einfacher, da die Auswerte- und Anzeigeeinrichtung nicht in einem hinreichend tiefen topfförmigen Gehäuseabschnitt zu montieren ist, sondern im Rahmen der Montage auf den ohne Weiteres von oben und der Seite zugänglichen Aufnahmeabschnitt oder Montageabschnitt des Gehäuses aufgesetzt und dort fixiert werden kann. Anschließend ist lediglich noch die Haube aus Glas nebst Dichtmittel aufzusetzen.

Die Haube weist bevorzugt eine zylindrische Wand und einen ebenen Boden auf. Es ist also eine napf- oder topfförmige Haubenform gegeben. Alternativ kann die Haube auch eine andere Form aufweisen. Sie kann eine mehreckige Wand aufweisen, sie kann z.B. rechteckig oder quadratisch sein, wie auch eine sechs- oder achteckige Wandform denkbar ist. Auch der Boden kann alternativ zur ebenen Ausführung gestuft sein oder eine Kontur aufweisen, z.B. gewölbt sein. Da die Haube eine dreidimensionale Geometrie aufweist, kann sie auch als Formglashaube bezeichnet werden.

Um das Zählergehäuse möglichst einfach auszuführen, weist dieses erfindungsgemäß einen plattenförmigen Aufnahmeabschnitt auf, an dem die Auswerte- und Anzeigeeinrichtung angeordnet ist und an dem die Haube, über das Dichtmittel abgedichtet, aufsitzt. Am Zählergehäuse ist folglich neben der üblicherweise zylindrischen Messstrecke lediglich der quasi ebene, plattenförmige Aufnahmeabschnitt auszubilden, was herstellungstechnisch besonders einfach ist, insbesondere wenn es sich bei dem Gehäuse um ein Gussbauteil handelt. Ein solcher plattenförmiger Abschnitt ermöglicht auch eine einfache Befestigung der Auswerte- und Anzeigeeinrichtung, die beispielsweise über entsprechende Schnapp- oder Rastverbindungen daran fixiert wird. An eben diesem Aufnahmeabschnitt wird auch die Glashaube über das Dichtmittel angeordnet, das heißt, dass sowohl für die Befestigung der Auswerte- und Anzeigeeinrichtung als auch der Glashaube eine gemeinsame Befestigungsebene oder -plattform gegeben ist.

Zweckmäßigerweise ist am Zählergehäuse oder dem plattenförmigen Aufnahmeabschnitt eine Sitzgeometrie zur Aufnahme der Haube vorgesehen, während an der Haube eine in die Sitzgeometrie eingreifende formkompatible Geometrie ausgebildet, wobei zwischen der Sitzgeometrie und der formkompatiblen Geometrie das Dichtmittel vorgesehen ist. Wenngleich es grundsätzlich denkbar wäre, die aneinander angrenzenden Abschnitte von Glashaube und Zylindergehäuse respektive Aufnahmeabschnitt ebenflächig, also plan auszuführen, ist es bevorzugt, wenn beidseits entsprechende formkompatible Dichtgeometrien ausgebildet sind. An dem Gehäuse oder dem Aufnahmeabschnitt ist eine erste Sitzgeometrie, die also auch die Anordnungspositionen der Haube definiert, ausgebildet, während der umlaufende Rand der Haube eine formkompatible Geometrie oder Dichtgeometrie aufweist. Das heißt, die beiden Geometrie greifen in der Montagestellung quasi ineinander, so dass die Haube zentriert wird und exakt positioniert werden kann. Zwischen ihnen wird das Dichtmittel eingebracht, so dass, neben der Dichtwirkung des Dichtmittels selbst, auch eine zusätzliche Dichtwirkung über die ineinandergreifenden Geometrien realisiert wird.

Bevorzugt sind die jeweiligen Geometrien in Form entsprechender Falze, die entsprechend der Geometrie der Haube bzw. der Wand geformt sind, also z.B. ringförmig oder mehreckig sind, ausgebildet. Ist beispielsweise ein scheiben- oder plattenförmiger, etwas vorspringender oder erhabener Aufnahmeabschnitt vorgesehen, so kann an diesem randseitig etwas nach innen versetzt ein z.B. bei einer zylindrischen Wandform ringförmig umlaufender Steg ausgebildet sein, so dass sich insgesamt ein nach außen offener Falz gebildet ist. Die in diesem Beispielsfall ebenfalls ringförmige Stirnkante ist formkomplementär dazu ausgebildet, bevorzugt derart, dass es mit einem radial außenliegenden, ringförmig umlaufenden Steg den an dem Aufnahmeabschnitt ausgebildeten Steg außenseitig umgreift. Dazwischen ist das Dichtmittel angeordnet, das eine diesen ineinandergreifenden Geometrien folgende Geometrie aufweist respektive diesen Bereich vollständig ausfüllt. Bei mehreckiger Wandform ist die Geometrie des Stegs und der Stirnkante entsprechend mehreckig, um einen geeigneten Eingriff zu ermöglichen.

Alternativ kann am Aufnahmeabschnitt auch eine z.B. ringförmige oder mehreckige Nut vorgesehen werden, in die die Haube mit einem randseitigen vorspringenden, entsprechend geformten Abschnitt eingreift oder in die die Haube mit dem ganzen Haubenrand eingreift. Das Dichtmittel wird in der Nut angeordnet.

Das Dichtmittel selbst kann ein Klebemittel sein, also ein von Haus aus fluides Mittel, das nach Applikation aushärtet und eine dichte, vorzugsweise bereits von Haus aus diffusionsdichte Dichtebene bildet. Anstelle eines Klebemittels kann auch eine Vergussmasse verwendet werden. Alternativ kann das Dichtmittel auch ein Dichtelement sein, das insbesondere bei Ausbildung ineinandergreifender Geometrien seitens des Gehäuses und der Haube ebenfalls formkompatibel ausgeführt ist, mithin also bereits eine dreidimensionale Grundform besitzt.

Die Haube selbst kann beispielsweise mittels einem oder mehreren Befestigungselementen am Zählergehäuse befestigt sein. Denkbar sind entsprechende Befestigungsschrauben oder Ähnliches. Alternativ kann die Befestigung auch über das Dichtmittel, wenn als ein solches ein Klebemittel oder eine Vergussmasse verwendet wird, erfolgen.

Des Weiteren kann eine weitere, die Haube übergreifende, am Zählergehäuse mittels eines oder mehrerer Befestigungselemente befestigte Abdeckhaube vorgesehen sein. Diese Abdeckhaube, die beispielsweise aus Kunststoff ist, kann als zusätzliche Schutzhaube über die Glashaube gestülpt sein. Auch sie kann dicht am Zählergehäuse aufsitzen, bevorzugt kann auch hierfür ein Dichtmittel, beispielsweise ein Klebemittel oder ein vorgefertigtes Dichtelement, verwendet werden. Ein dichter Sitz ist in diesem Fall jedoch nicht zwingend erforderlich, da die Abdeckhaube nur als Schutz dient und z.B. der Boden der Abdeckhaube teilweise auch offen sein kann, so dass auch der Boden der Glashaube freiliegt und man direkt auf diesen blicken kann. Kommt diese Abdeckhaube, die bevorzugt ebenfalls zumindest im den Bodenbereich der Glashaube übergreifenden Abschnitt transparent ist oder dort auch teilweise offen sein kann, zum Einsatz, so ist es nicht unbedingt erforderlich, dass auch die Glashaube mit separaten Befestigungselementen am Zählergehäuse befestigt ist. Vielmehr kann es hier bereits ausreichend sein, die Glashaube über das Dichtmittel, in diesem Fall dann bevorzugt ein Klebemittel, gehäuseseitig zu fixieren. Denn den mechanischen Schutz bietet die Abdeckhaube, die über die Befestigungselemente hinreichend fest am Zählergehäuse, gegebenenfalls dem plattenförmigen Aufnahmeabschnitt, fixiert ist.

Die Form der Abdeckhaube entspricht weitgehend der Form der Glashaube, so dass dies gut ineinander geschachtelt werden können. Besonders bevorzugt ist es hierbei, wenn die Abdeckhaube die Haube zumindest abschnittsweise formschlüssig übergreift, so dass die Abdeckhaube an der Glashaube anliegen kann. Eine großflächige oder vollständige Anlage ist aber nicht zwingend. Im Falle einer Anlage wird auch hierüber die Glashaube in ihrer Position zusätzlich fixiert.

Dabei ist gemäß einer besonders zweckmäßigen Weiterbildung der Erfindung vorgesehen, dass die Abdeckhaube zumindest abschnittsweise an der Haube anliegt und diese gegen das Zählergehäuse spannt. Die Abdeckhaube drückt folglich mit ihrer Bodenfläche gegen die Bodenfläche der Glashaube, so dass diese axial gegen das Zählergehäuse respektive den plattenförmigen Abschnitt und damit gegen das Dichtmittel gedrückt wird. Etwaige Befestigungselemente zur Fixierung der Glashaube sind hier in keinem Fall erforderlich. Die Abdeckhaube wird z.B. über die Befestigungselemente, also die Verbindungsschrauben oder Ähnliches, hinreichend fest gegen das Zählergehäuse geschraubt, wodurch auch die Haube aus Formglas hinreichend fest gegen den zählergehäuseseitigen Sitz und damit gegen das Dichtmittel gespannt wird. Alternativ zur Fixierung der Abdeckhaube durch Befestigungselemente ist auch denkbar, dass die Fixierung durch ein Dichtmittel wie ein Klebemittel oder eine Vergussmasse erfolgt, so dass ein Kraftschluss der unterschiedlichen Komponenten über das Dichtmittel sichergestellt ist und keine zusätzlichen Befestigungselemente erforderlich und zu montieren sind.

Schließlich kann unterhalb der Haube ein feuchteab- oder -adsorbierendes Mittel vorgesehen sein, das dazu dient, etwaige Restfeuchte, die im Rahmen der Produktion noch in das Volumen unterhalb der Glashaube gelangt, zu binden. Aufgrund der vollständigen Diffusionsdichtheit der Kapselung der Auswerte- und Anzeigeeinrichtung kann dieser Restfeuchte nicht entweichen, sie kann aber über das feuchte ab- oder -absorbierende Mittel gefangen werden.

Die Zählereinrichtung selbst ist bevorzugt ein Wasserzähler.

Weitere Vorteile und Einzelheiten der vorliegenden Erfindung ergeben sich aus den im Folgenden beschriebenen Ausführungsbeispielen anhand der Zeichnungen. Dabei zeigen:
- Fig. 1: eine Prinzipdarstellung einer erfindungsgemäßen Zählereinrichtung,
- Fig. 2: eine Aufsicht auf das Zählergehäuse aus Fig. 1 ohne aufgesetzte Glashaube und Abdeckhaube, und
- Fig. 3: eine Teilansicht einer weiteren Verbindungsmöglichkeit von Haube und Abdeckhaube mit dem Aufnahmeabschnitt.

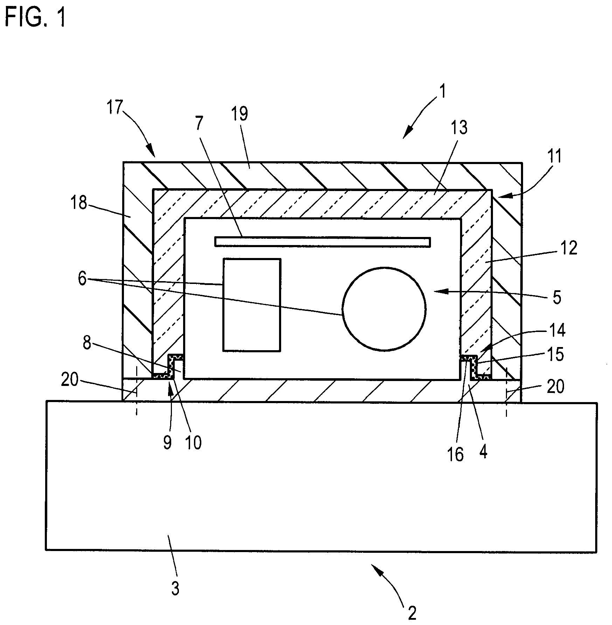

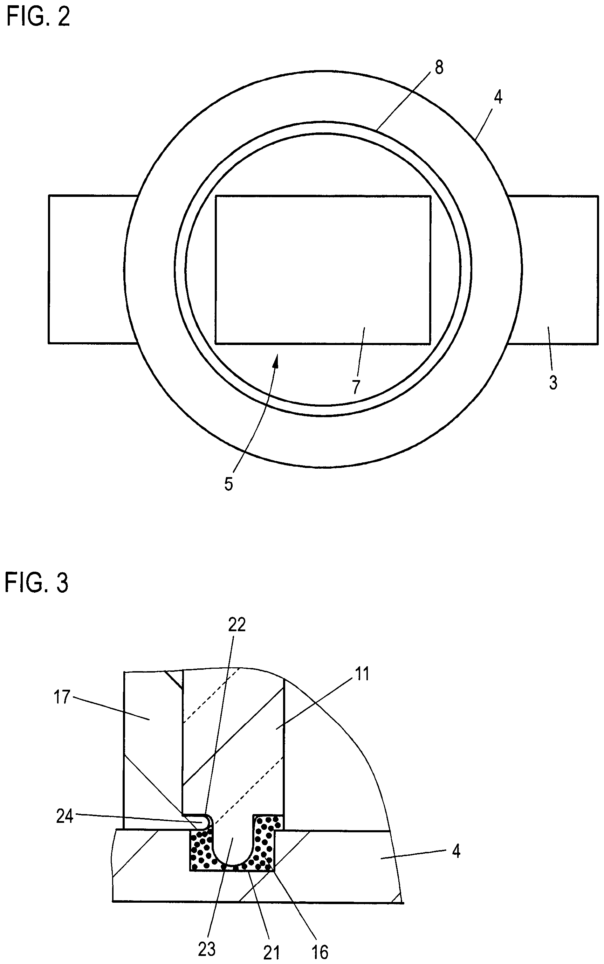

Fig. 1 zeigt eine erfindungsgemäße Zählereinrichtung 1, umfassend ein Zählergehäuse 2 mit einer rohrförmigen, von einem zu vermessenden Fluid durchströmbaren Messstrecke 3 sowie einem plattenförmigen Aufnahmeabschnitt 4, an dem eine Auswerte- und Anzeigeeinrichtung 5 umfassend diverse Elektronikkomponenten 6 sowie ein Anzeigedisplay 7 angeordnet ist. Der plattenförmige Aufnahmeabschnitt, siehe Fig. 2, ist rund und ragt seitlich etwas über die Messstrecke 3 hervor. An dem Aufnahmeabschnitt 4 ist, vom Rand etwas nach innen versetzt, ein ringförmiger vorspringender Steg 8 ausgebildet, so dass sich randseitig an dem plattenförmigen Aufnahmeabschnitt eine Sitzgeometrie 9 in Form eines Falzes 10 ausbildet. Das Zählergehäuse 2 selbst ist beispielsweise aus Metall, vorzugsweise Messing.

Vorgesehen ist des Weiteren eine Haube 11 aus Glas, die im gezeigten Beispiel eine umlaufende Zylinderwand 12 und einen oberseitig abschließenden Boden 13 aufweist. Die Haube 11 ist aus Glas, also aus einem für Wassermoleküle diffusionsdichten Material.

An der Stirnkante des Zylinderabschnitts 12 ist eine formkompatible Geometrie 14 ebenfalls in Form eines Falzes 15 ausgebildet. In der Montagestellung, siehe Fig. 1, greifen die Sitzgeometrie 9 und die formkompatible Geometrie 14 ineinander. Zwischen ihnen ist ein Dichtmittel 16 vorgesehen, beispielsweise ein ausgehärtetes Klebemittel oder ein von Haus aus der Querschnittsform des Dichtspaltes entsprechend geformtes, ringförmiges Dichtelement. Diese Dichtebene wird so ausgeführt respektive das Dichtmittel so gewählt, dass sich auch hier ein diffusionsdichter Abschluss ergibt und Wassermoleküle hierrüber nicht in das Innere der Haube 11 diffundieren könne.

Des Weiteren vorgesehen ist eine Abdeckhaube 17, vorzugsweise aus Kunststoff, die formkompatibel zur Haube 11 aus Glas ausgeführt ist. Sie weist ebenfalls eine Zylinderwand 18 sowie einen Boden 19 auf, wobei zumindest der Boden transparent ist, so dass das Display 7 sowohl durch den Boden 19 als auch den Boden 13 sichtbar ist. Alternativ kann der Boden 19 auch eine Ausnehmung aufweisen, also offen sein, so dass man direkt auf den transparenten Boden 13 der Glashaube 11 blicken kann. Auch die Abdeckhaube 17 sitzt auf dem plattenförmigen Aufnahmeabschnitt 4 auf, wie Fig. 1 zeigt. Sie ist, wie auch der plattenförmige Abschnitt 4 randseitig, ebenflächig ausgeführt. Zur Befestigung sind entsprechende Befestigungselemente 20 vorgesehen, die hier nur durch die gestrichelten Linien angedeutet sind. Beispielsweise kommen entsprechende Befestigungsschrauben zum Einsatz. Auch hier kann zusätzlich ein Dichtmittel zwischengeschaltet sein, wenngleich hier nicht näher gezeigt.

Die Dimensionierung der formkompatiblen Abdeckhaube 17 ist derart gewählt, dass sie, wenn sie am Zählergehäuse 2 befestigt ist, zumindest mit dem Boden 19 auf dem Boden 13 aufliegt und hierüber die gläserne Haube 11 in Richtung des plattenförmigen Aufnahmeabschnitts 4 spannt. Das heißt, dass die Haube 11 über die verschraubte Abdeckhaube 17 gegen das Dichtmittel 16 gedrückt bzw. gespannt wird. Hierüber wird der Dichtsitz noch fester, auch bedarf es keiner separaten Befestigung der gläsernen Haube 11 am Aufnahmeabschnitt 4. Alternativ kann auch das Dichtmittel 16, wenn dieses ein Klebemittel oder eine Vergussmasse ist, der Haubenfixierung dienen, so dass keine separat zu montierenden Befestigungselemente erforderlich sind.

Ersichtlich ist sowohl die Ausgestaltung des Zählergehäuses, an dem lediglich der quasi ebene, plattenförmige Aufnahmeabschnitt 4 mit dem Ringsteg 8 auszuführen ist, äußerst einfach. Daneben gestaltet sich die Montage der Auswerte- und Anzeigeeinrichtung 5 äußerst einfach, da die Befestigungsfläche des Aufnahmeabschnitts 4 problemlos zugänglich ist und die entsprechenden Befestigungsverbindungen, beispielsweise Schnapp- oder Rastverbindungen ohne Weiteres angebracht bzw. verschnappt werden können. Darüber hinaus wird durch das Überstülpen der gläsernen Haube 11 eine diffusionsdichte Abdichtung des Haubeninneren und damit ein diffusionsdichter Schutz der Auswerte- und Anzeigeeinrichtung 5 erreicht. Die zusätzliche Anbringung der übergestülpten Abdeckhaube 17 stellt darüber hinaus einen mechanischen Schutz der gläsernen Haube 11 dar, wie die Haube 11 über die befestigte Abdeckhaube 17 auch fest in den Dichtsitz gespannt ist.

Anstelle der hier gezeigten falzartigen, ineinander greifenden Dichtgeometrien am Aufnahmeabschnitt 4 und dem Rand der Haube 11 ist es denkbar, am Aufnahmeabschnitt 4 bzw. in dessen Aufnahmeebene eine Ringnut auszubilden. In diese greift beispielsweise ein an der Stirnseite der Haube 11 ausgebildeter stegartiger Ringvorsprung ein, dessen Breite etwas schmäler ist als die Nutbreite, so dass er einerseits ohne weiteres in die Ringnut eingesetzt werden kann und andererseits auch ein Dichtmittel, sei es ein zunächst flüssiger, dann ausgehärteter Kleber, sei es ein dreidimensional vorgefertigtes Dichtelement, in die Ringnut eingebracht werden kann. Die Haube 11 sitzt mit dem Hauberand auf dem Aufnahmeabschnitt 4 auf, wobei auch in diesem Bereich noch das Dichtmittel vorhanden sein kann. Alternativ kann die Ringnut auch so breit sein, dass die Haube 11 mit dem ganzen Rand in sie eingesetzt werden kann, wobei auch hier natürlich noch das Dichtmittel gleich welcher Art in die Ringnut eingebracht wird. Auch hierüber kann eine diffusionsdichte Dichtebene realisiert werden, auch hier bilden die ineinander greifenden Geometrien zusätzlich eine Labyrinthdichtung.

Wenngleich nicht dargestellt, ist es möglich, im Inneren der Haube 11 ein feuchteab- bzw. adsorbierendes Mittel vorzusehen, um etwaige vorhandene Restfeuchte zu binden.

Fig. 3 zeigt eine weitere Verbindungsmöglichkeit zum Fixieren der Haube 11 und der Abdeckhaube 17 an dem Aufnahmeabschnitt 4. Der Aufnahmeabschnitt 4 weist hier eine Nut 21 auf, in die ein Dichtmittel 16, z.B. ein Kleber oder eine Vergussmasse, eingebracht wird. In die Nut 21 greift ein an der Haube 11 vorgesehener, an der Stirnkante 22 ausgebildeter Vorsprung 23 ein, worüber die Haube 11 fixiert wird.

Ferner ist an der Abdeckhaube 17 im Bereich der Stirnkante ein nach innen zur Haube 11 gerichteter, z.B. umlaufender Vorsprung 24 vorgesehen, der zwischen die Stirnkante 22 der Haube 11 und den Aufnahmeabschnitt 4 gebracht wird, so dass es zu einem Verklemmen des Vorsprungs 24 zwischen der Stirnkante 22 und dem Aufnahmeabschnitt kommt. Die beim Eindrücken des Vorsprungs 23 in die Dichtmasse 16 gegebenenfalls etwas aus der Nut 21 verdrängte Dichtmasse 16 kann gleichzeitig auch der Abdichtung des Übergang zur Abdeckhaube 17 oder z.B. zum Ankleben der Abdeckhaube 17 dienen.

Alternativ dazu besteht die Möglichkeit, z.B. mehrere verteilte Vorsprünge 24 an der Abdeckhaube 17 vorzusehen und diese als Rastvorsprünge auszulegen, so dass die Abdeckhaube 17 auch nachträglich auf die Haube 11 aufgesetzt und entlang dieser in die Endposition geschoben wird, wo die Vorsprünge 24 in eine Ausnehmung zwischen der Stirnkante 22 der Haube 11 und dem Aufnahmeabschnitt 4 einrasten.

Wenngleich die Figuren eine runde Haubenanordnung mit zylindrischen Wänden zeigt, ist auch eine mehreckige, z.B. rechteckige oder quadratische Gestaltung denkbar, was natürlich auch zu einer entsprechenden Anpassung der der Fixierung etc. dienenden Geometrie im Bereich der Falze, Nuten, Vorsprünge etc. führt.

Die gezeigte Zählereinrichtung ist beispielsweise ein Wasserzähler, es kann sich dabei aber auch um eine andere Zählerart handeln. In jedem Fall ist es möglich, die Zählereinrichtung in hoch- oder dauerfeuchter Umgebung sowie auch unter Wasser montieren zu können. Denn die Auswerte- und Anzeigeeinrichtung 5 ist unabhängig vom Montageort vor einem Eindringen von Wasser, auch molekularer Art, geschützt.

## Patentansprüche

1. Zählereinrichtung, umfassend ein Zählergehäuse mit einer von einem zu vermessenden Fluid durchströmbaren Messtrecke sowie eine außerhalb am Zählergehäuse angeordnete Auswerte- und Anzeigeeinrichtung zum Ermitteln wenigstens eines fluidbezogenen Messwerts sowie eine am Zählergehäuse befestigte, die Auswerte- und Anzeigeeinrichtung übergreifende Abdeckung, wobei die Abdeckung eine die Auswerte- und Anzeigeeinrichtung (5) übergreifende Haube (11) aus Glas ist, die über ein Dichtmittel (16) abgedichtet auf dem Zählergehäuse (2) aufsitzt, **dadurch gekennzeichnet, dass** das Dichtmittel (16) ein für Wassermoleküle eine Diffusionsdichtheit bewirkendes Dichtmittel ist, und dass das Zählergehäuse (2) einen plattenförmigen Aufnahmeabschnitt (4), an dem die Auswerte- und Anzeigeeinrichtung (5) angeordnet ist und an dem die Haube (11), über das Dichtmittel (16) abgedichtet, aufsitzt, aufweist.

2. Zählereinrichtung nach Anspruch 1, **dadurch gekennzeichnet, dass** die Haube (11) eine zylindrische oder mehreckige Wand (12) und einen ebenen oder gestuften oder konturierten Boden (13) aufweist.

3. Zählereinrichtung nach Anspruch 1 oder 2, **dadurch gekennzeichnet, dass** am Zählergehäuse (2) oder dem Aufnahmeabschnitt (4) eine Sitzgeometrie (9) zur Aufnahme der Haube (11) vorgesehen ist und an der Haube (11) eine in die Sitzgeometrie (9) eingreifende formkompatible Geometrie (14) ausgebildet ist, wobei zwischen der Sitzgeometrie (9) und der formkompatiblen Geometrie (14) das Dichtmittel (16) vorgesehen ist.

4. Zählereinrichtung nach Anspruch 3, **dadurch gekennzeichnet, dass** die Sitzgeometrie (9) und die formkompatible Geometrie (14) in Form ringförmiger Falze (10, 15) gebildet ist.

5. Zählereinrichtung nach Anspruch 3, **dadurch gekennzeichnet, dass** am Aufnahmeabschnitt (4) eine Nut vorgesehen ist, in die die Haube (11) mit einem vorspringenden Abschnitt oder mit dem kompletten Haubenrand eingreift.

6. Zählereinrichtung nach einem der vorangehenden Ansprüche, **dadurch gekennzeichnet, dass** das Dichtmittel (16) ein Klebemittel, eine Vergussmasse oder ein Dichtelement ist.

7. Zählereinrichtung nach einem der vorangehenden Ansprüche, **dadurch gekennzeichnet, dass** die Haube (11) mittels einem oder mehreren Befestigungselementen oder über das Dichtmittel in Form eines Klebemittels oder einer Vergussmasse am Zählergehäuse (2) befestigt ist.

8. Zählereinrichtung nach einem der vorangehenden Ansprüche, **dadurch gekennzeichnet, dass** eine weitere die Haube (11) übergreifende, am Zählergehäuse (2) mittels einem oder mehreren Befestigungselementen (20) befestigte Abdeckhaube (17) vorgesehen ist.

9. Zählereinrichtung nach Anspruch 8, **dadurch gekennzeichnet, dass** die Abdeckhaube (17) über ein Dichtmittel zum Zählergehäuse (2) abgedichtet ist.

10. Zählereinrichtung nach Anspruch 8 oder 9, **dadurch gekennzeichnet, dass** die Form der Abdeckhaube (17) im Wesentlichen der Form der Haube (11) entspricht.

11. Zählereinrichtung nach einem der Ansprüche 8 bis 10, **dadurch gekennzeichnet, dass** die Abdeckhaube (17) die Haube (11) formschlüssig übergreift.

12. Zählereinrichtung nach einem der Ansprüche 8 bis 11, **dadurch**
**gekennzeichnet, dass** die Abdeckhaube (17) zumindest abschnittsweise an der Haube (11) anliegt und diese gegen das Zählergehäuse (2) spannt.

13. Zählereinrichtung nach einem der Ansprüche 8 bis 12, **dadurch gekennzeichnet, dass** die Abdeckhaube (17) aus Kunststoff ist.

14. Zählereinrichtung nach einem der vorangehenden Ansprüche, **dadurch gekennzeichnet, dass** unterhalb der Haube (11) ein Feuchte ab- oder adsorbierendes Mittel vorgesehen ist.

15. Zählereinrichtung nach einem der vorangehenden Ansprüche, **dadurch gekennzeichnet, dass** es ein Wasserzähler ist.

## Claims

1. Meter device comprising a meter housing, which has a measurement section through which a fluid to be measured is able to flow, and an evaluation and display device, which is arranged on the outside of the meter housing and serves for ascertaining at least one fluid-related measurement value, and a cover, which is fastened to the meter housing and engages over the evaluation and display device, wherein the cover is a glass hood (11) which engages over the evaluation and display device (5) and which is seated on the meter housing (2) in a manner sealed off via a sealing means (16), **characterized in that** the sealing means (16) is a sealing means which brings about diffusion tightness for water molecules, and **in that** the meter housing (2) has a plate-shaped receiving portion (4) on which the evaluation and display device (5) is arranged, and on which the hood (11) is seated in a manner sealed off via the sealing means (16).

2. Meter device according to Claim 1, **characterized in that** the hood (11) has a cylindrical or polygonal wall (12) and a planar or stepped or contoured base (13) .

3. Meter device according to Claim 1 or 2, **characterized in that** a seat geometry (9) for receiving the hood (11) is provided on the meter housing (2) or the receiving portion (4) and a geometry (14) of compatible shape that engages into the seat geometry (9) is formed on the hood (11), wherein the sealing means (16) is provided between the seat geometry (9) and the geometry (14) of compatible shape.

4. Meter device according to Claim 3, **characterized in that** the seat geometry (9) and the geometry (14) of compatible shape are formed in the form of ringshaped folds (10, 15).

5. Meter device according to Claim 3, **characterized in that**, on the receiving portion (4), there is provided a groove into which the hood (11) engages by way of a projecting portion or by way of the entire hood rim.

6. Meter device according to one of the preceding claims, **characterized in that** the sealing means (16) is an adhesive, a casting compound or a sealing element.

7. Meter device according to one of the preceding claims, **characterized in that** the hood (11) is fastened to the meter housing (2) by means of one or more fastening elements or via the sealing means in the form of an adhesive or a casting compound.

8. Meter device according to one of the preceding claims, **characterized in that** a further covering hood (17) is provided, said further covering hood engaging over the hood (11) and being fastened to the meter housing (2) by means of one or more fastening elements (20).

9. Meter device according to Claim 8, **characterized in that** the covering hood (17) is sealed off with respect to the meter housing (2) via a sealing means.

10. Meter device according to Claim 8 or 9, **characterized in that** the shape of the covering hood (17) corresponds substantially to the shape of the hood (11).

11. Meter device according to one of Claims 8 to 10, **characterized in that** the covering hood (17) engages over the hood (11) in a form-fitting manner.

12. Meter device according to one of Claims 8 to 11, **characterized in that** the covering hood (17) at least partially bears against the hood (11) and clamps the latter against the meter housing (2).

13. Meter device according to one of Claims 8 to 12, **characterized in that** the covering hood (17) is made of plastic.

14. Meter device according to one of the preceding claims, **characterized in that** a moisture-absorbing or moisture-adsorbing means is provided below the hood (11).

15. Meter device according to one of the preceding claims, **characterized in that** said meter device is a water meter.

## Revendications

1. Dispositif compteur, comprenant un boîtier de compteur avec une section de mesure pouvant être traversée par un fluide à mesurer, ainsi qu'un dispositif d'évaluation et d'affichage agencé à l'extérieur sur le boîtier de compteur pour déterminer au moins une valeur de mesure relative au fluide, ainsi qu'un couvercle fixé au boîtier de compteur, recouvrant le dispositif d'évaluation et d'affichage, le couvercle étant un capot (11) en verre recouvrant le dispositif d'évaluation et d'affichage (5), qui repose sur le boîtier de compteur (2) en étant étanchéifié par l'intermédiaire d'un moyen d'étanchéité (16), **caractérisé en ce que** le moyen d'étanchéité (16) est un moyen d'étanchéité assurant une étanchéité à la diffusion pour les molécules d'eau, et **en ce que** le boîtier de compteur (2) présente une section de réception (4) en forme de plaque, sur laquelle est agencé le dispositif d'évaluation et d'affichage (5) et sur laquelle repose le capot (11), en étant étanchéifié par l'intermédiaire du moyen d'étanchéité (16).

2. Dispositif compteur selon la revendication 1, **caractérisé en ce que** le capot (11) présente une paroi (12) cylindrique ou polygonale et un fond (13) plat ou étagé ou profilé.

3. Dispositif compteur selon la revendication 1 ou 2, **caractérisé en ce qu'**une géométrie de siège (9) est prévue sur le boîtier de compteur (2) ou la section de réception (4) pour recevoir le capot (11) et une géométrie de forme compatible (14) s'engageant dans la géométrie de siège (9) est réalisée sur le capot (11), le moyen d'étanchéité (16) étant prévu entre la géométrie de siège (9) et la géométrie de forme compatible (14).

4. Dispositif compteur selon la revendication 3, **caractérisé en ce que** la géométrie de siège (9) et la géométrie de forme compatible (14) sont formées sous forme de plis annulaires (10, 15).

5. Dispositif compteur selon la revendication 3, **caractérisé en ce qu'**une rainure est prévue sur la section de réception (4), dans laquelle le capot (11) s'engage par une section en saillie ou par le bord complet du capot.

6. Dispositif compteur selon l'une quelconque des revendications précédentes, **caractérisé en ce que** le moyen d'étanchéité (16) est un moyen adhésif, une masse de scellement ou un élément d'étanchéité.

7. Dispositif compteur selon l'une quelconque des revendications précédentes, **caractérisé en ce que** le capot (11) est fixé au boîtier de compteur (2) au moyen d'un ou de plusieurs éléments de fixation ou par l'intermédiaire du moyen d'étanchéité sous la forme d'un moyen adhésif ou d'une masse de scellement.

8. Dispositif compteur selon l'une quelconque des revendications précédentes, **caractérisé en ce qu'**un autre capot de couverture (17) recouvrant le capot (11), fixé au boîtier de compteur (2) au moyen d'un ou de plusieurs éléments de fixation (20) est prévu.

9. Dispositif compteur selon la revendication 8, **caractérisé en ce que** le capot de couverture (17) est étanchéifié par rapport au boîtier de compteur (2) par l'intermédiaire d'un moyen d'étanchéité.

10. Dispositif compteur selon la revendication 8 ou 9, **caractérisé en ce que** la forme du capot de couverture (17) correspond essentiellement à la forme du capot (11).

11. Dispositif compteur selon l'une quelconque des revendications 8 à 10, **caractérisé en ce que** le capot de couverture (17) recouvre le capot (11) par complémentarité de forme.

12. Dispositif compteur selon l'une quelconque des revendications 8 à 11, **caractérisé en ce que** le capot de couverture (17) s'appuie au moins par sections sur le capot (11) et serre celui-ci contre le boîtier de compteur (2).

13. Dispositif compteur selon l'une quelconque des revendications 8 à 12, **caractérisé en ce que** le capot de couverture (17) est en matière plastique.

14. Dispositif compteur selon l'une quelconque des revendications précédentes, **caractérisé en ce qu'**un moyen d'absorption ou d'absorption de l'humidité est prévu sous le capot (11).

15. Dispositif compteur selon l'une quelconque des revendications précédentes, **caractérisé en ce qu'**il s'agit d'un compteur d'eau.
